# EUROPEAN PATENT APPLICATION

(11) **EP 4 843 849 A1**
(43) Date of publication of application: **25.11.2026**
(21) Application number: 25177277.8
(22) Date of filing: 19.05.2025
(51) Int. Cl.: B60T 17/08

(54) **SPRING BRAKE ACTUATOR FOR A PNEUMATIC BRAKING SYSTEM OF A VEHICLE, IN PARTICULAR UTILITY VEHICLE, PNEUMATIC BRAKING SYSTEM AND VEHICLE**

(71) Applicant: ZF CV Systems Europe BV, 1170 Brüssel (BE)
(72) Inventor: PREM KUMAR, Pratheesh Kumar, 641014 Coimbatore (IN); ARANGARASAN, Senthil Kumar, 600095 Chennai (IN)
(74) Representative: Rabe, Dirk-Heinrich

(57) **Abstract**

Spring brake actuator (100) for a pneumatic braking system (210) of a vehicle (200a), in particular utility vehicle (200b); wherein the spring brake actuator (100) comprises a housing (140); the housing (140) defines an axis (A) and a radial direction (R) perpendicular to the axis (A); the housing (140) comprises a cylinder surface (141) coaxially arranged with the axis (A); the housing (140) comprises a housing base (143) extended in the radial direction (R); the spring brake actuator (100) comprises a cover plate (148); the spring brake actuator (100) comprises a service brake part (110) and a parking brake part (120); wherein the service brake part (110) and the parking brake part (120) are enclosed by the cylinder surface (141), the housing base (143) and the cover plate (148).

## Description

The disclosure relates to a spring brake actuator for a pneumatic braking system of a vehicle, in particular utility vehicle. The disclosure also relates to a pneumatic braking system of a vehicle, in particular utility vehicle, wherein the pneumatic braking system comprises a spring brake actuator and to a vehicle, in particular utility vehicle.

Braking systems, such as air brake systems, are used to control the movement of vehicles, in particular utility vehicles, in a safe and effective manner. In particular, pneumatic brakes are used on utility vehicles such as trucks, trailers, and buses, which typically have large gross vehicle weights. The inertial mass of these vehicles, in combination with the speeds at which they might travel, requires a braking arrangement which responds rapidly with appropriate braking power. One system component of a pneumatic brake arrangement is a spring brake actuator. The spring brake actuator typically provides the necessary force when braking the vehicle.

Typically, a spring brake actuator comprises a service brake part and parking brake part. Such a spring brake actuator may be configured as a so called tristop spring brake actuator. The spring brake actuator comprises a first housing section and a second housing section. One of the housing sections, also called cylinders, forms a service brake non-pressure chamber and a service brake pressure chamber which are separated from each other by the diaphragm; and the other of the housing sections forms a parking brake non-pressure chamber and a parking brake pressure chamber which are separated from each other by a parking brake piston. A pushrod and a pushrod plate, also called piston plate or piston, connected with the pushrod is arranged in the housing of the service brake part. The pressure chamber is fluidly connected to a source of pressurized air and the service brake non-pressure chamber mounts the pushrod, which is couplable to a brake arrangement. Therein, the introduction and exhaustion of pressurized air into the service brake pressure chamber reciprocates the pushrod into and out of the spring brake actuator along an axis to apply and release the operating brakes.

Such a spring brake actuator may occupy a comparably large volume, which, in turn, results in an increase in device length as well as in generating a dead volume in the parking chamber.

A more compact spring brake actuator is disclosed in EP 4 015 323 A2. EP 4 015 323 A2 discloses a spring brake actuator for use in a commercial vehicle, said actuator comprising a service brake and a spring brake portion, said spring brake portion having a housing comprising a first end being proximal to the service brake, a wall section extending from the first end, a second end being distal to the service brake, and a locking mechanism for locking the ends to the wall section. The locking mechanism is arranged between the wall section and the second end of said housing. The service brake portion comprises a diaphragm acting on a service brake portion piston. Pressurized air is introduced in the service brake portion housing by means of a pressure inlet.

However, there is room for improvement in terms of a space-saving construction, cost-effectiveness and adaptability.

Known spring brake actuators comprises a height, also called length, or envelope dimension that is defined by the cylinders and requires for each of the service brake part and the parking brake part a locking and sealing joint for connecting the service and parking chambers. Each locking joint may cause complexity in the construction and manufacturing of the spring brake actuator.

In the light of the prior art, it is an object of the disclosure to provide a contribution to the prior art. In particular, an object of the disclosure is to provide a spring brake actuator with an improved usage of construction space and improved variability.

The object is solved by the subject-matter according to independent claim 1 and according to the remaining independent claims. Dependent claims relate to preferred embodiments.

According to an aspect of the present disclosure, a spring brake actuator for a pneumatic braking system of a vehicle, in particular utility vehicle, is provided; wherein the spring brake actuator comprises a housing; the housing defines an axis and a radial direction perpendicular to the axis; the housing comprises a cylinder surface coaxially arranged with the axis; the housing comprises a housing base extended in the radial direction; the spring brake actuator comprises a cover plate; the spring brake actuator comprises a service brake part and a parking brake part; wherein the service brake part and the parking brake part are enclosed by the cylinder surface, the housing base and the cover plate.

The disclosure provides an improved design that may reduce the overall length making the spring brake actuator more compact. This length optimization is achieved by a single-cylinder enclosure design with a cover plate fixated to the housing. The housing provides the cylinder surface and the housing base and the cover plate may provide a counter part to the cover plate and may be arranged to close a volume that is provided by the housing. The housing and the cover plate provide a single-cylinder enclosure assembly, wherein all internal components of the service brake part and of the parking brake part may be arranged and in particular stacked inside. This may achieve simplifying and streamlining the assembly process of the spring brake actuator. Further, the single-cylinder design enables that only one locking joint may be necessary, namely between the housing and the cover plate. This also simplifies the manufacturing, assembly and construction of the spring brake actuator.

Additionally, the housing may comprise generic dimensions so that the service brake chamber and/or the parking brake chamber may be provided to adapt to different sizes of the piston and/or to different effective cross-sectional areas of the service brake part and/or of the parking brake part. This flexibility simplifies providing variants of the spring brake actuator and reduces assembly complexity.

Optionally, the spring brake actuator comprises an annular chamber divider; wherein the chamber divider is adapted and arranged to separate the service brake part and the parking brake part from each other. The chamber divider may be arranged within the housing and may comprise an annular and/or a ring shape. This may achieve that the service brake parts and the parking brake part may be separated from each other and that a piston of the service brake part may be supported by the chamber divider.

Optionally, the service brake part comprises a pressure chamber of the service brake part and the parking brake part comprises a pressure chamber of the parking brake part; and the chamber divider is adapted and arranged to separate the pressure chamber of the service brake part and the pressure chamber of the parking brake part from each other. It is realized that separating the pressure chambers of the service brake part and of the parking brake part from each other by the chamber divider enables a particularly efficient stacking of internal components of the spring brake actuator.

Optionally, the cylinder surface comprises circumferentially distributed through-holes; the chamber divider comprises at least one recess; the spring brake actuator comprises fastening members; and each of the fastening members projects radially inwardly through one of the through-holes into the at least one recess to fixate the chamber divider. This may achieve that the chamber divider is mechanically fixated and prevented from moving in an axial direction and/or from tilting. Thus, the chamber divider provides well defined volumes of the parking brake part and of the service brake pad and enables a well-defined support for the piston of the parking brake parts.

Optionally, the spring brake actuator comprises six or eight fastening members and each of the fastening members is configured as a screw. It is realized that fixating the chamber divider with for example six or eight screws may balance requirements relating to a reliable fixation of the chamber divider and an effective mountability of the spring brake actuator.

Optionally, the chamber divider comprises at least one circumferentially extended sealing reception portion; and the spring brake actuator comprises at least one sealing member arranged within the reception portion and adapted to seal the chamber divider against the cylinder surface. The sealing member may enhance the separation between the service brake part and the parking brake part, in particular between the pressure chamber of the parking brake part and the pressure chamber of the service brake part. The sealing member may be ring-shaped. Optionally, a plurality of sealing members are provided, wherein the sealing members are axially distantly arranged from each other. For example, two sealing members that are O-Rings may be used.

Optionally, the spring brake actuator comprises an annular spacer and a cylindrical cover; the spacer is adapted to support the cover at the cylinder surface; and the cover is arranged to define a radial extension, a diameter and/or an effective pressure acting area of the service brake part. The spacer may be used to control an amount of that volume in the service brake part. The spacer and the cover may be interchangeable parts to adapt the pressure acting area and/or the diameter to customer requirements, thereby eliminating a dead volume between the cylinder surface and the cover. This achieves that a broad variety of effective pressure acting areas may be provided by minor modifications of the spring brake actuator.

Optionally, the spring brake actuator comprises a piston of the service brake part; the piston is adapted and arranged to move along the axis; and the piston and the cover are in a circumferential and sliding contact with each other. In other words, the cover and the piston are functionally connected with each other and the cover and/or the piston define the diameter and/or the effective pressure acting area of the service brake part.

Optionally, the piston comprises a circumferential piston recess; the spring brake actuator comprises a piston sealing; and the piston sealing is adapted to seal the cover against the piston. This achieves sealing the pressure chamber of the service brake part from the non-pressure chamber of the service brake part.

Optionally, the spring brake actuator comprises a push rod; the push rod comprises a curved and/or partially spherical end; and the piston comprises a reception portion for receiving the spherical end of the push rod. This may achieve that the push rod may comprise a slight inclination compared to piston without impeding the functionality of the spring brake actuator. This enables a more effective mountability of the spring brake actuator.

Optionally, the spring brake actuator comprises a push rod; the push rod comprises a radially extended protrusion; and the spring brake actuator comprises a plug fixated to the piston and adapted to constrain an axial movement of the push rod relative to the piston. The plug in combination with the protrusion may constrain a relative axial movement between the push rod and the piston. This may enhance the reliability of the functioning of the spring brake actuator.

Optionally, the housing comprises a flange; and the cover plate is supported on the flange. The flange may project radially outwardly from the cylinder surface to enable a reliable positioning and fixation of the cover plate to the housing.

Optionally, the spring brake actuator comprises locking members; and the cover plate and the flange are fixated to each other via the locking members. The locking members may enable an effective fixation of the cover plate to the housing.

Optionally, the locking members comprises four bolts oriented parallel to the axis. Providing four bolts as locking members may particularly effectively and reliably enable the fixation of the cover plate to the housing.

Optionally, the cylinder surface and the housing base are integrally formed. This achieves absence of any locking joint between the cylinder surface and the housing base. Further, the cylinder surface and the housing base as a one-part solution may be particularly cost-effectively manufactured, for example by deep drawing.

According to an aspect of the disclosure, a pneumatic braking system of a vehicle, in particular utility vehicle, is provided, wherein the pneumatic braking system comprises the spring brake actuator according to the disclosure. Optionally, the spring brake actuator comprises one or more features as described as optional and/or preferred to achieve a technical effect corresponding thereto.

According to an aspect of the disclosure, a vehicle, in particular utility vehicle, is provided. The vehicle, in particular utility vehicle, comprises the pneumatic braking system according to the disclosure and/or the spring brake actuator according to the disclosure. Optionally, the pneumatic braking system and/or the spring brake actuator comprises one or more features as described as optional and/or preferred to achieve a technical effect corresponding thereto.

Further advantages and technical features and their technical effects are disclosed in the figures and the description thereof.

The figures show preferred embodiments as follows:
Fig. 1 a schematic of a vehicle, in particular utility vehicle, according to an embodiment of the disclosure;
Fig. 2 a sectional view of a spring brake actuator according to the prior art;
Fig. 3 a sectional view of a spring brake actuator according to an embodiment of the disclosure;
Fig. 4 a perspective view of a spring brake actuator according to an embodiment of the disclosure;
Fig. 5 a side view of a spring brake actuator according to an embodiment of the disclosure;
Fig. 6 a top view of a spring brake actuator according to an embodiment of the disclosure; and
Fig. 7 a perspective view of a spacer for a spring brake actuator according to an embodiment of the disclosure;
Fig. 8 a perspective view of a chamber divider of a spring brake actuator according to an embodiment of the disclosure;
Fig. 9 a sectional view of a chamber divider of a spring brake actuator according to an embodiment of the disclosure;
Fig. 10 a perspective view of a chamber divider of a spring brake actuator according to an embodiment of the disclosure;
Fig. 11 a sectional view of a chamber divider of a spring brake actuator according to an embodiment of the disclosure;
Fig. 12 a perspective view of a cover and a cover plate each of a spring brake actuator according to an embodiment of the disclosure; and
Fig. 13 a sectional view of a cover and a cover plate each of a spring brake actuator according to an embodiment of the disclosure.

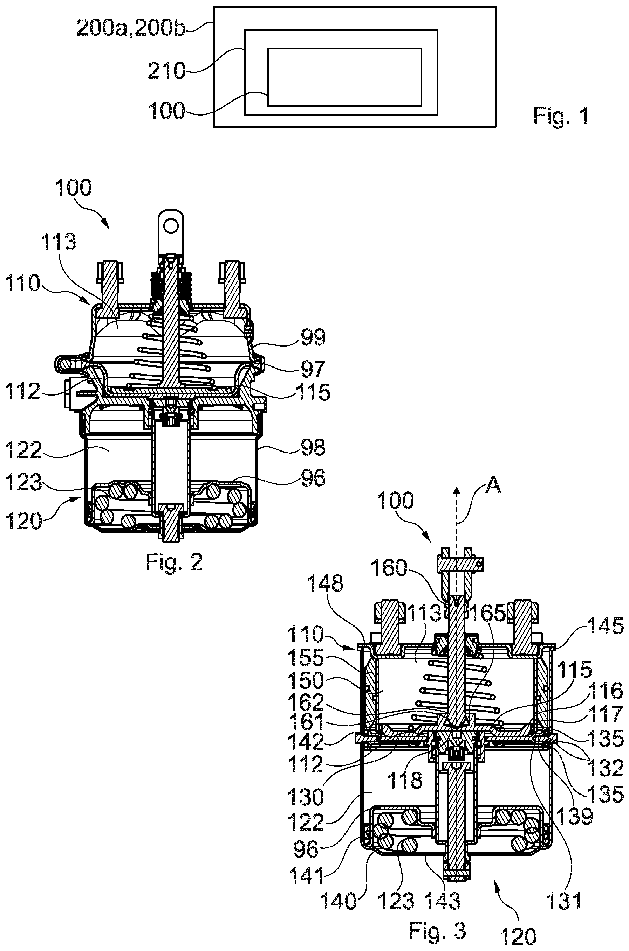

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a bus, a truck, a trailer and/or towing vehicle of a vehicle combination.

The vehicle 200a, 200b comprises a pneumatic braking system 210. The pneumatic braking system 210 is adapted to be actuated by a driver of the vehicle 200a, 200b and/or by an autonomous driving function of the vehicle 200a, 200b to apply and/or release a braking torque.

The pneumatic braking system 210 comprises a spring brake actuator 100.

The spring brake actuator 100 and features thereof are further described with reference to Figures 3 to 7.

Figure 2 shows a sectional view of a spring brake actuator according 100 to the prior art.

The spring brake actuator 100 comprises a first cylinder 99 and a second cylinder 98. The first cylinder 99 forms a service brake part 110 with a non-pressure chamber 113 and a pressure chamber 112 which are separated from each other by a first diaphragm 97. The second cylinder 98 forms a parking brake part 120 with a non-pressure chamber 122 and a pressure chamber 121 which are separated from each other by a parking brake piston 96.

Therein, a potential axial travel of each of the diaphragm 97 and the parking brake piston 96 is for example 57 mm. However, the length of the spring brake actuator 100, i.e., a distance between a top of the first cylinder 99 and a base of the second cylinder 98 is for example 209 mm.

Figure 3 shows a sectional view of a spring brake actuator 100 according to an embodiment of the disclosure. The spring break actuator 100 of Figure 3 is a spring brake actuator 100 for a pneumatic braking system 210 of a vehicle 200a, in particular utility vehicle 200b. Such a pneumatic braking system 210 and such a vehicle is described with reference to Figure 1. Figure 3 is described under reference to Figure 1.

The spring brake actuator 100 of Figure 3 comprises a housing 140. The housing 140 defines an axis A and a radial direction R perpendicular to the axis A. Therein, an extension of the spring break actuator 100 along the axis A may characterize the length and/or height of the spring break actuator 100. The radial direction R defines a cross-section of the spring break actuator 100.

The housing 140 comprises a cylinder surface 141 coaxially arranged with the axis A. In other words, the cylinder surface 141 is circumferentially arranged around the axis A and comprises an at least partially constant extension in the radial direction R and/or radius. The cylinder surface 141 may be rotationally symmetric with respect to the axis A.

The housing 140 comprises a housing base 143 extended in the radial direction R. The base 143 is radially extended. The housing base 143 is a base surface of the cylindrical housing 140:
The cylinder surface 141 and the housing base 143 constitute the housing 140.

The cylinder surface 141 and the housing base 143 are integrally formed. In other words, the cylinder surface 141 in the housing base 143 are formed in one piece. The housing 140 may be made of metal. E.g., the cylinder surface 141 and the housing base 143 may be formed by deep drawing.

The spring brake actuator 100 comprises a cover plate 148. The cover plate 148 is axially distantly arranged from the housing base 143. The cylinder surface 141 is arranged between the housing base 143 and the cover plate 148. The cover plate 148 may be made of metal, e.g. by stamping.

The housing 140 comprises a flange 145. The flange 145 is circumferentially arranged at the cylinder surface 141 and extends radially outwardly from the cylinder surface 141. The cover plate 148 is supported on the flange 145. Therein, the cover plate 148 contacts the flange 145 circumferentially.

The spring brake actuator 100 comprises a service brake part 110 and a parking brake part 120. The service brake part 110 and the parking brake part 120 are enclosed by the cylinder surface 141, the housing base 143 and the cover plate 148. In other words, the service brake part 110 and the parking brake part 120 are enclosed by the housing 140 and the cover plate 148. Thus, the service brake part 110 and the parking brake part 120 are enclosed by two parts, namely by the housing 140, which provides the cylinder surface 141 and the housing base 143, and by the cover plate 148.

The service brake part 110 comprises a pressure chamber 112 of the service brake part 110 and a non-pressure chamber 113 of the service brake part 110 and the parking brake part 120 comprises a pressure chamber 122 of the parking brake part 120 and a non-pressure chamber 123 of the parking brake part 120.

The spring brake actuator 100 comprises an annular chamber divider 130. The chamber divider 130 is adapted and arranged to separate the service brake part 110 and the parking brake part 120 from each other. The chamber divider 130 is disc-shaped and comprises an opening (not indicated) for a parking brake piston 124 to project through the chamber divider 130.

The chamber divider 130 is adapted and arranged to separate the pressure chamber 112 of the service brake part 110 and the pressure chamber 122 of the parking brake part 120 from each other. I.e., along the axis A, the chamber divider 130 is centrally arranged within the spring break actuator 100.

The cylinder surface 141 comprises circumferentially distributed through-holes 142. The chamber divider 130 comprises at least one recess 131. Alternatively or additionally, the chamber divider 130 comprises a plurality of circumferentially distributed blind holes which may be threaded. The spring brake actuator 100 comprises fastening members 139. Each of the fastening members 139 projects radially inwardly through one of the through-holes 142 into the at least one recess 131 to fixate the chamber divider 130. For example, each of the fastening members 139 projects into one of the blind holes.

The spring brake actuator 100 comprises six fastening members 139 and each of the fastening members 139 is configured as a screw. Therein, the recesses 131 may be blind holes with a thread, wherein into each of the blind holes one of the fastening members 139 may be screwed. The screws may be of type M6 or M8.

The chamber divider 130 comprises two circumferentially extended sealing reception portions 132. The two sealing reception portions 132 are along the axis A distantly arranged from each other. The spring brake actuator 100 comprises two sealing members 135, wherein one of the sealing members 135 is arranged in each of the reception portions 132 and adapted to seal the chamber divider 130 against the cylinder surface 141. In another embodiment (not shown) another number of sealing reception portions 132 and sealing members 135 may be provided.

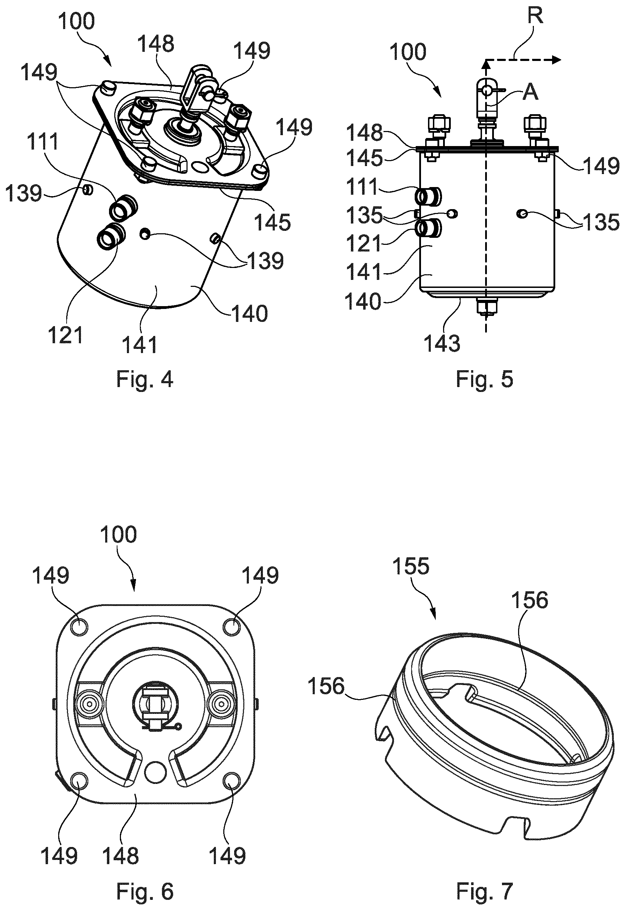

The spring brake actuator 100 comprises an annular spacer 155 and a cylindrical cover 150. The spacer 155 is also shown in Figure 7. As illustrated in Figure 3, the spacer 155 is adapted to support the cover 150 at the cylinder surface 141. In other words, the spacer 155 is arranged between the cover 150 and the cylinder surface 141. Therein, the cylinder surface 141 contacts and supports the spacer 155 and the cover 150 contacts and supports the spacer 155.

The cover 150 is arranged to define a radial extension, a diameter and/or an effective pressure acting area of the service brake part 110. This is achieved by an interaction between the cover of 150 and a piston 115. The spring brake actuator 100 comprises the piston 115 of the service brake part 110. Piston 115 separates the pressure chamber 112 of the service brake part 110 from the non-pressure chamber 113 of the service brake part 110. The piston 115 is adapted and arranged to move along the axis A. Therein, the piston 115 and the cover 150 are in a circumferential and sliding contact with each other. With that, the piston 115 and the cover 150 define the diameter and thus the effective pressure acting area of the service brake part 110. Thus, with minimal design modifications, namely by a modification and/or replacement of the piston 115, the cover 150 and the spacer 155, a type 24/24-spring break actuator 100 of a specific stroke may be adapted to accommodate other types of spring break actuators 100 with lower service side requirements relating to the effective pressure acting area, such as spring break actuators 100 of 14/24, 16/24, 20/24, 27/24 and/or 30/24.

The piston 115 comprises a circumferential piston recess 116. In other words, the piston recess 116 extends circumferentially at piston 115. The spring brake actuator 100 comprises a piston sealing 117. The piston sealing 117 is adapted to seal the cover 150 against the piston 115.

The spring brake actuator 100 comprises a push rod 160. The push rod 160 and the piston 115 are functionally coupled. I.e., a deflection of the piston 115 is coupled to a deflection of the push rod 160.

The push rod 160 comprises a curved and/or partially spherical end 161. The end 161 is arranged within the spring break actuator. The end 161 is adapted to enable the functional coupling between the push rod 160 in the piston 115. The piston 115 comprises a reception portion 118 for receiving the spherical end 161 of the push rod 160. The reception portion 118 may be conical to receive the curved and/or partially spherical end 161 of the push rod 160.

The push rod 160 comprises a radially extended protrusion 162. The protrusion 162 may be a part of the spherical end 161. Alternatively, the protrusion 162 may be a radially extended collar. The spring brake actuator 100 comprises a plug 165 fixated to the piston 115 and adapted to constrain an axial movement of the push rod 160 relative to the piston 115. For fixating the plug 165 to the piston 115, the piston 115 may comprise an internal thread and the plug 165 may comprise an external thread for cooperating with the internal thread of the piston 115. The plug 165 may comprise a cross-section that is smaller than a cross-section of the spherical end 161. Thus, the axial movement of the push rod 160 relative to the piston 115 may be prevented.

A potential axial travel of each of the piston 115 and of a parking brake piston 96 of the parking brake part 120 is for example 57 mm. The length of the spring brake actuator 100, i.e., a distance between a top of the first cylinder 99 and a base of the second cylinder 98 is for example 193 mm. i.e., the spring brake actuator 100 achieves a height reduction compared to the spring brake actuator 100 according to the prior art of about 16mm.

Figure 4 shows a perspective view of a spring brake actuator 100 according to an embodiment of the disclosure. The spring break actuator 100 of Figure 4 is the spring brake actuator 100 of Figure 3. Figure 4 is described under reference to Figures 1 and 3.

Figure 4 illustrates that a service brake port 111 and a parking brake port 122 is connected to the housing 140. The service brake port 111 is adapted to apply pressurized air to the pressure chamber 112 of the service brake part 110 and the parking brake port 121 is adapted to apply pressurized air to the pressure chamber 122 of the parking brake part 120.

Figure 4 also illustrates the single-cylinder configuration of the spring break actuator 100 and the fastening members 139 to fixate the chamber divider 130. Therein, the fastening members 139 are six circumferentially distributed screws which project radially inwardly through the through holes 142 of the cylinder surface 141. In another embodiment (not shown) another number of fastening members 129 may be used, e.g., eight fasting members 139.

The spring brake actuator 100 comprises locking members 149. The cover plate 148 and the flange 145 are fixated to each other via the locking members 149. The locking members 149 comprises four bolts oriented parallel to the axis A.

Thus, the spring brake actuator 100 comprises a single-cylinder enclosure assembly with all internal components stacked inside, secured by a single locking mechanism using nuts and bolts on the top cover plate 148, simplifying and streamlining the assembly process.

Figure 5 shows a side view of a spring brake actuator 100 according to an embodiment of the disclosure. The spring break actuator 100 of Figure 5 is the spring brake actuator 100 of Figures 3 and 4.

Figure 6 shows a top view of a spring brake actuator 100 according to an embodiment of the disclosure. The spring break actuator 100 of Figure 6 is the spring brake actuator 100 of Figures 3 to 5.

Figure 7 shows a perspective view of a spacer 155 for a spring brake actuator according to an embodiment of the disclosure. The spacer 155 is the spacer 155 of Figure 3. Figure 7 is described under reference to Figures 1 and 3 to 6.

The spacer 155 is made of plastics.

The spacer 155 comprises two spacer sealing reception portions 156. One of the spacer sealing reception portions 156 is arranged at a radially inner surface of the spacer 155 to receive a sealing for sealing the spacer 155 against the cover 150. The other of the spacer sealing reception portions 156 is arranged at a radially outer surface of the spacer 155 to receive a sealing for sealing the spacer 155 against the cylinder surface 141. Along the axis A, the spacer sealing reception portions 156 are distantly arranged from each other. The sealings in the spacer sealing reception portions 156 may prevent flow of pressurized air from the pressure chamber 112 of the service brake part 110 into the non-pressure chamber 113 of the service brake part 110.

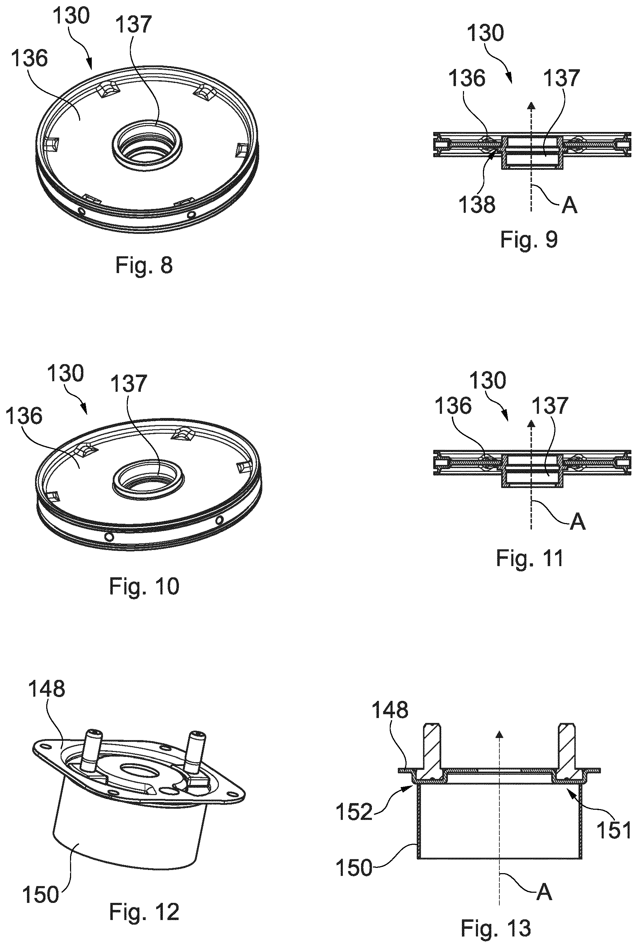

Figure 8 shows a perspective view of a chamber divider 130 of a spring brake actuator according 100 to an embodiment of the disclosure. The chamber divider 130 of Figure 8 is the chamber divider 130 as shown in Figure 3. Figure 8 is described under reference to Figures 1 and 3 to 7.

The chamber divider 130 comprises two members, namely a divider plate 136 and a center boss 137. The divider plate 136 is adapted to divide the pressure chamber 112 of the service brake part 110 and the pressure chamber 122 of the parking brake part 120 from each other. The center boss 137 comprises two circular grooves to assemble the bearing and lip seal. Each of the divider plate 136 and the center boss 137 may be made of steel.

The divider plate 136 and the center boss 137 may be manufactured as separate components and may be welded together. Therein, welding may be performed in a welding zone 138 (see Figure 9) with a 360° coverage, i.e., the welding covers an entire circumference of the center boss 137.

Figure 9 shows a sectional view of a chamber divider 130 of a spring brake actuator 100 according to an embodiment of the disclosure. The chamber divider 130 of Figure 9 is the chamber divider 130 of Figure 8. Figure 9 illustrates the welding zone 138 which extends circumferentially at the interface between the divider plate 136 and the center boss 137.

Figure 10 shows a perspective view of a chamber divider 130 of a spring brake actuator 100 according to an embodiment of the disclosure. The chamber divider 130 of Figure 10 is an alternative to the chamber divider 130 of Figures 8 and 9. Therein, the chamber divider 130 of Figure 10 is made in one-piece. The chamber divider 130 may be made from aluminium and may be manufactured by aluminium casting.

Figure 11 shows a sectional view of a chamber divider 130 of a spring brake actuator 100 according to an embodiment of the disclosure. The chamber divider 130 of Figure 11 is the chamber divider 130 of Figure 10.

Figure 12 shows a perspective view of a cover 150 and a cover plate 148 each of a spring brake actuator 100 according to an embodiment of the disclosure. The cover 150 and cover plate 148 of Figure 12 are the cover 150 and cover plate 148 as shown in Figure 3. Figure 12 is described under reference to Figures 1 and 3 to 11.

The cover plate 148 is welded to the cover 150 at a first welding region 151 or at a second welding region 152 (see Figure 13). Each of the first welding region 151 and the second welding region 152 is circumferentially extended to ensure a 360-degree coverage around the circumference of the cover 150. This guarantees that the assembly is pressure-tight, with no air connection between the non-pressure chamber 113 and the pressure chamber 112 of the service brake part 110.

Figure 13 shows a sectional view of a cover 150 and a cover plate 148 each of a spring brake actuator 100 according to an embodiment of the disclosure. The cover 150 and the cover plate 148 of Figure 13 are the cover 150 and the cover plate 148 of Figures 3 and 12. Figure 13 is described under reference to Figures 1 and 3 to 12.

The first welding region 151 is arranged radially inwardly from the cover 150. The second welding region 152 is arranged radially outwardly from the cover 150.

### List of reference signs (Part of the description)

- 96: parking brake piston
- 97: first diaphragm
- 98: second cylinder
- 99: first cylinder

- 100: spring brake actuator

- 110: service brake part
- 111: service brake port
- 112: pressure chamber of service brake part
- 113: non-pressure chamber of service brake part
- 115: piston
- 116: piston recess
- 117: piston sealing
- 118: reception portion

- 120: parking brake part
- 121: parking brake port
- 122: pressure chamber of parking brake part
- 123: non-pressure chamber of parking brake part
- 124: parking brake piston

- 130: chamber divider
- 131: recess
- 132: sealing reception portion
- 135: sealing member
- 136: divider plate
- 137: center boss
- 138: welding zone
- 139: fastening member

- 140: housing
- 141: cylinder surface
- 142: through-hole
- 143: housing base
- 145: flange
- 148: cover plate
- 149: locking member

- 150: cover
- 151: first welding region
- 152: second welding region
- 155: spacer
- 156: spacer sealing reception portion

- 160: push rod
- 161: end
- 162: protrusion

- 165: plug

- 200a: vehicle
- 200b: utility vehicle

- 210: pneumatic braking system

- A: axis
- R: radial direction

## Claims

1. Spring brake actuator (100) for a pneumatic braking system (210) of a vehicle (200a), in particular utility vehicle (200b); wherein
- the spring brake actuator (100) comprises a housing (140);
- the housing (140) defines an axis (A) and a radial direction (R) perpendicular to the axis (A);
- the housing (140) comprises a cylinder surface (141) coaxially arranged with the axis (A);
- the housing (140) comprises a housing base (143) extended in the radial direction (R);
- the spring brake actuator (100) comprises a cover plate (148);
- the spring brake actuator (100) comprises a service brake part (110) and a parking brake part (120); wherein
- the service brake part (110) and the parking brake part (120) are enclosed by the cylinder surface (141), the housing base (143) and the cover plate (148).

2. Spring brake actuator (100) as claimed in claim 1, wherein
- the spring brake actuator (100) comprises an annular chamber divider (130);
wherein
- the chamber divider (130) is adapted and arranged to separate the service brake part (110) and the parking brake part (120) from each other.

3. Spring brake actuator (100) as claimed in claim 2, wherein
- the service brake part (110) comprises a pressure chamber (112) of the service brake part (110) and the parking brake part (120) comprises a pressure chamber (122) of the parking brake part (120); and
- the chamber divider (130) is adapted and arranged to separate the pressure chamber (112) of the service brake part (110) and the pressure chamber (122) of the parking brake part (120) from each other.

4. Spring brake actuator (100) as claimed in claim 2 or 3, wherein
- the cylinder surface (141) comprises circumferentially distributed through-holes (142);
- the chamber divider (130) comprises at least one recess (131);
- the spring brake actuator (100) comprises fastening members (139); and
- each of the fastening members (139) projects radially inwardly through one of the through-holes (142) into the at least one recess (131) to fixate the chamber divider (130).

5. Spring brake actuator (100) as claimed in claim 4, wherein
- the spring brake actuator (100) comprises six or eight fastening members (139) and each of the fastening members (139) is configured as a screw.

6. Spring brake actuator (100) as claimed in any of claims 2 to 5, wherein
- the chamber divider (130) comprises at least one circumferentially extended sealing reception portion (132); and
- the spring brake actuator (100) comprises at least one sealing member (135) arranged within the reception portion (132) and adapted to seal the chamber divider (130) against the cylinder surface (141).

7. Spring brake actuator (100) as claimed in any one of the preceding claims; wherein
- the spring brake actuator (100) comprises an annular spacer (155) and a cylindrical cover (150);
- the spacer (155) is adapted to support the cover (150) at the cylinder surface (141); and
- the cover (150) is arranged to define a radial extension, a diameter and/or an effective pressure acting area of the service brake part (110).

8. Spring brake actuator (100) as claimed in claim 7; wherein
- the spring brake actuator (100) comprises a piston (115) of the service brake part (110);
- the piston (115) is adapted and arranged to move along the axis (A); and
- the piston (115) and the cover (150) are in a circumferential and sliding contact with each other.

9. Spring brake actuator (100) as claimed in claim 7 or 8; wherein
- the piston (115) comprises a circumferential piston recess (116);
- the spring brake actuator (100) comprises a piston sealing (117); and
- the piston sealing (117) is adapted to seal the cover (150) against the piston (115).

10. Spring brake actuator (100) as claimed in any of claims 7 to 9, wherein
- the spring brake actuator (100) comprises a push rod (160);
- the push rod (160) comprises a curved and/or partially spherical end (161); and
- the piston (115) comprises a reception portion (118) for receiving the spherical end (161) of the push rod (160).

11. Spring brake actuator (100) as claimed in any of claims 7 to 10, wherein
- the spring brake actuator (100) comprises a push rod (160);
- the push rod (160) comprises a radially extended protrusion (162); and
- the spring brake actuator (100) comprises a plug (165) fixated to the piston (115) and adapted to constrain an axial movement of the push rod (160) relative to the piston (115).

12. Spring brake actuator (100) as claimed in any one of the preceding claims; wherein
- the housing (140) comprises a flange (145); and
- the cover plate (148) is supported on the flange (145).

13. Spring brake actuator (100) as claimed in claim 12; wherein
- the spring brake actuator (100) comprises locking members (149); and
- the cover plate (149) and the flange (145) are fixated to each other via the locking members (149).

14. Spring brake actuator (100) as claimed in claim 13; wherein
- the locking members (149) comprises four bolts oriented parallel to the axis (A).

15. Spring brake actuator (100) as claimed in any one of the preceding claims; wherein
- the cylinder surface (141) and the housing base (143) are integrally formed.

16. Pneumatic braking system (210) for a vehicle (200a), in particular utility vehicle (200b); wherein the pneumatic braking system (210) comprises a spring brake actuator (100) as claimed in any one of the preceding claims.

17. Vehicle (200a), in particular utility vehicle (200b); wherein the vehicle (200a), in particular utility vehicle (200b), comprises a pneumatic braking system (210) as claimed in claim 16 and/or a spring brake actuator (100) as claimed in any one of claims 1 to 15.
